# EUROPEAN PATENT APPLICATION

(11) **EP 1 970 848 A1**
(43) Date of publication of application: **17.09.2008**
(21) Application number: 08004821.8
(22) Date of filing: 14.03.2008
(51) Int. Cl.: G06Q 20/00, G06Q 30/00

(54) **Internet business security method**

(30) Priority: 16.03.2007 TW 96109217
(71) Applicant: Chiu, Yeong How, Fu Hsin Road Keelung City 203 (TW)
(72) Inventor: Chiu, Yeong How, Fu Hsin Road Keelung City 203 (TW)
(74) Representative: Becker Kurig Straus

(57) **Abstract**

An internet business security method is disclosed. According to this method, first, a one-time password is generated based on a smart card that includes a chip to perform the processes of storing data, processing data and encoding/decoding data. Then, the one-time password is identified by the website. When the one-time password is correct, the smart card holder is permitted to login to the website for further trading. The trade object for this website is the smart card holder identity registered in the bank.

## Description

### BACKGROUND OF THE INVENTION

### Field of Invention

The invention relates to a security business method and, in particular, to an internet business security method.

### Related Art

Typically, when a user makes a trade on the Internet, some user information is transferred through the Internet. Especially, when the user decides to buy goods from a website, the account information and the personal user information will be transferred to the website for further processing. However, while the personal information is transferred through the Internet, a hacker can steal the information and use the information to login to another website to buy goods. Therefore, it is very important for a website operator to identify that the received account number and personal information precisely belongs to the trade object based upon the concept of privacy protection. The present invention provides a method to resolve the above problem.

### SUMMARY OF THE INVENTION

An objective of the invention is to provide an internet business security method.

Another objective of the invention is to provide an internet business security method that can identify the trade subject.

An internet business security method is disclosed. According to this method, first, a one-time password is generated based on an EMV smart card that includes a chip to perform the processes of storing data, processing data and encoding/decoding data. Then, the website identifies the one-time password. When the one-time password is correct, the EMV smart card holder is permitted to login to the website for further trading. The trade object for this website is the EMV smart card holder's real ID login at the bank.

Accordingly, the smart card is involved in the validation process for the present invention. Therefore, a high quality security method is provided. Moreover, the logistics information and the cash flow information are connected to the identity of the customer based on the smart card. Therefore, the consumption characteristic of this customer is recorded on the website for further promotions.

### BRIEF DESCRIPTION OF THE DRAWINGS

These and other features, aspects and advantages of the invention will become apparent by reference to the following description and accompanying drawings which are given by way of illustration only, and thus are not limitative of the invention, and wherein:
FIG. 1 is a schematic view of a trade platform according to an embodiment of the invention;
FIG. 2 is a validation process according to an embodiment of the invention; and
FIG. 3 is a trade flowchart for the trade platform according to an embodiment of the invention.

### DETAILED DESCRIPTION OF THE INVENTION

The present invention will be apparent from the following detailed description, which proceeds with reference to the accompanying drawings, wherein the same references relate to the same elements.

According to the present invention, a smart card uses a one-time password generator to generate a one-time password to pass the validation process for a web site. In a preferred embodiment, this smart card conforms to, for example, the EMV CAP specification. However, in other embodiments, other types of cards are also used in the present invention as long as the card can be used with a corresponding generator to generate a one-time password. The card is, such as, a bank cash card, a bank credit card, a prepaid card, a mobile phone SIM card. In an embodiment, when the card is a mobile phone SIM card, the mobile phone serves as a one-time password generator that works with the SIM card to generate the one-time password. The present invention utilizes the EMV CAP smart card to implement the following embodiment. The EMV CAP smart card includes an IC chip that can perform calculation and memory functions. Therefore, in addition to store data, this smart card also can process data and decode/encode data to protect data.

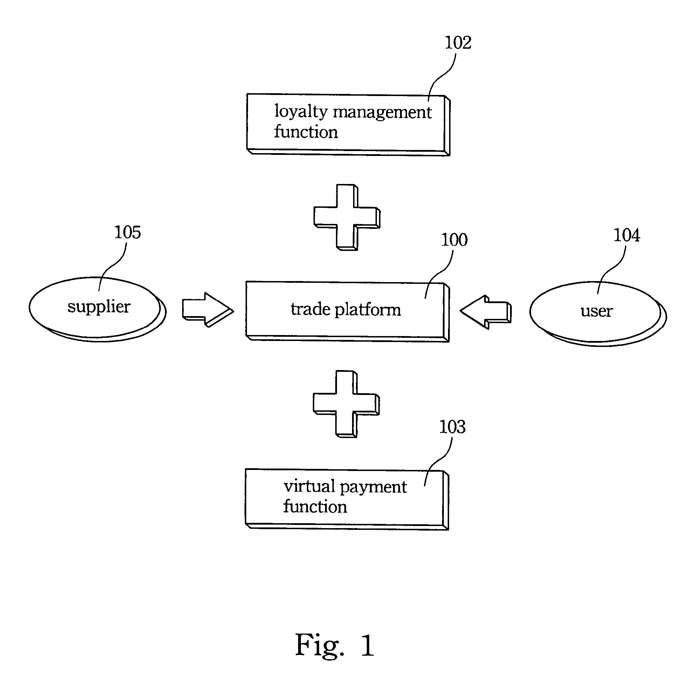

FIG. 1 is a schematic view of a trade platform according to an embodiment of the invention. After a validation program running on the trade platform 100 validates the real identity of the user 104, a virtual identity is assigned to the user 104 and the trade platform 100 provides the information to the other suppliers 105 cooperating with the platform. Because the validation program is based on the EMV CAP smart card, the payment ability and the real identity of the user 104 are verified. Therefore, the trade platform 100 can provide additional trade functions, such as a virtual payment function 103 and a loyalty management function 102. The virtual payment function 103 enables the user 104 to use virtual money, such as bonus points, to trade with on the trade platform 100 or the supplier 105. The loyalty management function 102 provides the suppliers 105 with the ability to design special promotion programs to attract customers to make further purchases.

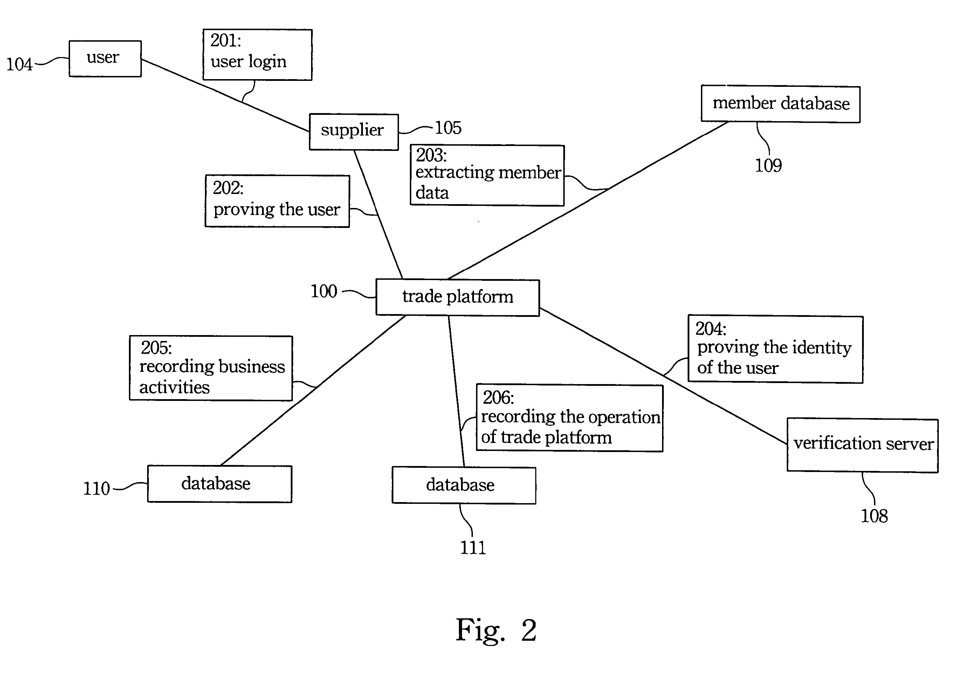

FIG. 2 is a validation process according to an embodiment of the invention. First, in step 201, a user 104 issues a login requirement to a supplier 105, such as an online-game service provider. After the supplier 105 receives the login requirement, the requirement is transferred from the supplier 105 to the trade platform 100 to prove. In an embodiment, a smart card conforming to the EMV CAP specification works with a one-time password generator to generate a one-time password. For example, the user 104 inputs the personal identification number to the one-time password generator to work with the data stored in the chip in the smart card to generate a one-time password. In other embodiments, the trade platform 100 generates a login number. The user 104 inputs the personal identification number and the login number to the one-time password generator to work with the data stored in the chip in the smart card to generate a one-time password. After the one-time password is generated, the user 104 uses this one-time password to login the trade platform 100.

Next, in step 203, this one-time password is uploaded to a verification server 108 to verify the one-time password from the trade platform 100. Because the one-time password is changed in every time login, the verification server 108 calculates the one-time password with a negotiated formula in every time login to verify the identity of the user 104 in step 204. After the verification server 108 verifies the uploaded one-time password, the verified result is transferred to the supplier 105 through the trade platform 100. The supplier 105 permits the user 104 to login. In an embodiment, after the verification server 108 verifies the uploaded one-time password, the trade platform 100 extracts the member data from the member database 109. The member data includes the birthday, the address or hobby of the member.

It is noticed that the verification server 108 is operated by the trade platform 100 or by the just third party. The member database 109 is built by the trade platform 100 or is provided by other business parties. Moreover, after the user 104 logs into the supplier 105, all business activities between the user 104 and the supplier 105, and corresponding operations of the trade platform 100 are recorded in the database 110 and 111 as shown in step 205 and step 206 to serve as the trade record.

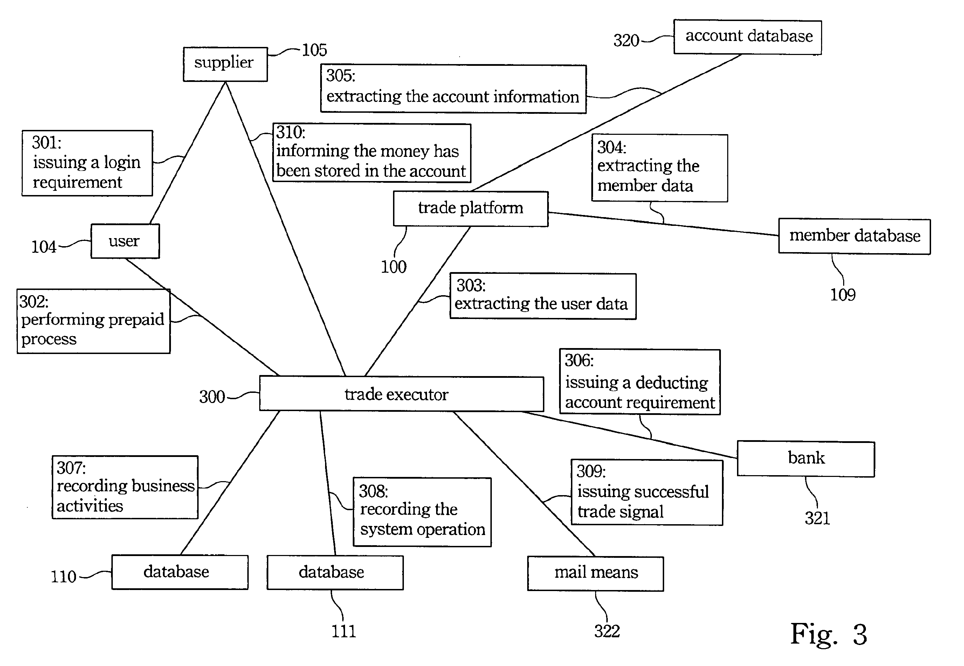

FIG. 3 is a trade flowchart for the trade platform according to an embodiment of the invention. The trade executor 300 of the trade platform 100 performs the trade process. A smart card conforming to the EMV CAP specification works with a one-time password generator to generate a one-time password.

First, in step 301, a user 104 issues a login requirement to a supplier 105, such as an online-game service provider. After the supplier 105 receives the login requirement, the requirement is transferred from the supplier 105 to the trade platform 100 for verification. The verification process is described in figure 2. After the supplier 105 permits the user 104 to login, according to this embodiment, the user 104 is required to perform a prepaid process in step 302 because the supplier 105 is an online-game service provider. In other embodiments, the step 302 can be some other process, such as a payment process. According to the present invention, a smart card conforming to the EMV CAP specification works with a one-time password generator to generate a one-time password. After the user 104 uses the one-time password to login to the supplier 105, the trade executor 300 provides a page for the user 104 to perform the prepaid process or payment process in step 302.

After the trade executor 300 receives the prepaid process or payment process in step 302, the executor 300 issues a requirement to the trade platform 100 for the data of the user 104. After the trade platform 100 receives the requirement, the trade platform 100 extracts the corresponding member data and user account information of the user 104 from the member database 109 and account database 320 and sends them to the executor 300 in step 304 and step 305. According to the present invention, the member data and the account information are stored in the member database 109 and account database 320 respectively to improve the data security.

After the executor 300 receives the member data and account information of the user 104 from the trade platform 100, the executor 300 can issue a deducting account requirement to a bank 321 in step 306. The system operation of the executor 300 and the business activities between the executor 300 and the bank 321 are recorded in the database 110 and 111 in step 307 and 308. After the executor 300 identifies the bank has deducted fund from the user's account, the executor 300 controls the mail means 322 to issue a successful trade signal in step 309 to inform the supplier 105 that the prepaid or payment from the user 104 has been stored to the account of the supplier 105 in step 310.

In another embodiment, a code, such as the Digital Signature, is generated by the trade platform 100 based on the time, amount or goods in the trade. This code is transferred to the user 104 for further identification. For example, the user 104 inputs the personal identification number and the code to a one-time password generator to work with the data stored in the chip in the smart card to generate a one-time password. Then, the user 104 uses this one-time password to relogin on the trade platform 100 to identify this code. Such double identifying can further improve the connection relationship between the trade and the user 104.

According to the present invention, using a one-time password reduces the opportunities for a hacker to illegally enter the user's account. A certain verification process is performed to identify the real identity of the user. Therefore, a true connection relationship between the user and his account is undoubtedly built. In this case, the bonus get from the promotion activity of the supplier can be stored to a virtual account of the user. The user can use the virtual account as a physical account to access the virtual payment function 103. In other words, based on the proof process, both the virtual and the physical account can certainly connect to the real identity of the user. Therefore, virtual account information and physical account information can be transferred to each other. Moreover, information from two physical accounts belonging to different banks of the user 104 also can be transferred to each other according to the present invention. On the other hand, the account is certainly connected to the real identity of the user 104. Therefore, it is easy for the supplier 105 to push the loyalty promotion activity for special customers to reach the loyalty management function 103.

Accordingly, a smart card conforming to the EMV CAP specification works with a one-time password generator to generate a one-time password for user verification in the present invention. When the user uses the smart card to make purchases from a web site, the logistics information and the cash flow information is connected to the smart card. Therefore, the consumption characteristic of this customer is recorded in the website for further promotion and a safety trade is created. The present invention has the following advantages.
1. A smart card conforming to the EMV CAP specification works with a one-time password generator to generate a one-time password for verification. The real identity of the user can be certainly verified by connecting with a bank that issues this smart card. Therefore, the verification process is improved.
2. The payment ability of the user is identified by using the smart card conforming to the EMV CAP specification to prove. Moreover, such verification process also can ensure the trade.
3. The account is certainly connected to the real identity of the user.
Therefore, it is easy for the supplier to push the loyalty promotion activity for special customers to reach the loyalty management function. Moreover, the suppliers can cooperate to each other to perform promotion activities to enlarge the scope of promotion.

While the invention has been described by way of example and in terms of the preferred embodiment, it is to be understood that the invention is not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. A security business method in an Internet for a trade platform, comprising the steps of:
using a user's virtual identity registered in a supplier or the trade platform and a one-time password that is generated based on a smart card that is issued by an issuer based on the user's real identity to make a trade with the supplier, wherein the smart card includes a chip to perform the processes of storing data, processing data and encoding/decoding data, wherein the supplier can not associate the virtual identity of the user with the real identity of the user or the supplier can not generate needed information for verifying the one-time password;
transferring information related with the one-time password from the supplier to the trade platform, wherein the information is not related to the real identity of the user or the information is not the needed information for verifying the one-time password;
generating the needed information for verifying the one-time password;
ensuring the one-time password; and
transferring the ensuring result to the supplier, wherein the supplier make a trade with the user based on the ensuring result.

2. The method of claim 1, wherein the smart card is a payment certification.

3. The method of claim 1, wherein the issuer does not provide the supplier the user's virtual identity.

4. The method of claim 1, wherein generating the one-time password further comprising:
inputting a personal identification number of the user; and
generating the one-time password, wherein an end means may generate the one-time password based on the personal identification number and the data stored in the chip in the smart card.

5. The method of claim 1, wherein generating the one-time password further comprising:
generating a verifying number;
inputting a personal identification number of the user and the verifying number; and
generating the one-time password, wherein an end means may generate the one-time password based on the personal identification number, the verifying number and the data stored in the chip in the smart card.

6. The method of claim 5, wherein the verifying number includes at least one number.

7. The method of claim 1, wherein generating the one-time password further comprising:
generating the one-time password, wherein an end means may generate the one-time password based on the data stored in the chip in the smart card.

8. The method of claim 1, wherein generating the one-time password further comprising:
generating a verifying number;
inputting the verifying number; and
generating the one-time password, wherein an end means may generate the one-time password based on the verifying number and the data stored in the chip in the smart card.

9. The method of claim 8, wherein the verifying number includes at least one number.
